# EUROPEAN PATENT APPLICATION

(11) **EP 0 786 331 A2**
(43) Date of publication of application: **30.07.1997**
(21) Application number: 97830009.3
(22) Date of filing: 16.01.1997
(51) Int. Cl.: B32B 3/12, B32B 31/10

(54) **Automatic continuous system for making glass fabric panels and light alloy cellular spacer elements**

(30) Priority: 29.01.1996 IT MI960153
(71) Applicant: ROOFING ITALIANA S.r.l., 20134 Milano (IT)
(72) Inventor: Marinelli, Giuseppe, 20134 Milano (IT); Branca, Alfonso, 20134 Milano (IT)
(74) Representative: Cicogna, Franco

(57) **Abstract**

The present invention relates to an automatic continuous system for making glass fabric panels and light alloy cellular spacer elements characterized in that the system comprises in a cascade relationship: an expanding station (1) for a compressed cellular spacer element; a coupling station (50) for coupling, to the cellular spacer element, wall fabrics and holding layers; a polymerizing station (60) for polymerizing the wall fabrics impregnating resins, either of an auto-estinguishing type or not; and a trimming and cutting station (80) for trimming and cutting the formed rigid panel.

## Description

The present invention relates to an automatic continuous system for making glass fabric panels and light alloy cellular spacer elements.

Small weight and high mechanical strength panels are already known, which are practically constituted by an assembly including two outer walls, made of a glass fabric material, and having different compositions and gauges of the base yarn, which walls are applied on a central spacer element, constituted by a perpendicular sheet elements made of aluminium or special materials, arranged with a cellular arrangement, of honeycomb type, having a very small weight.

In particular, the outer walls are impregnated by binding resins such as, for example, epoxy resins, processed phenolic resins, vinyl resins and so on.

Thus, a flat construction is obtained which has comparatively high twisting and bending properties and a very small weight and a broad size range.

The above mentioned panels provide great advantages, such as anti-flame properties deriving from not inflammable components, antitoxic characteristics under possible flame conditions as well as a great insulating capability and good disposability properties.

Notwithstanding the above mentioned great advantages of prior panels, they are however affected by practical drawbacks since their making method is substantially a manual method which only in limited cases uses automatic feeding, driving and drawing systems.

In particular, in this manual method a lot of manual step must be carried out such as: the cutting to sized shape of the glass fabric bottom wall, the impregnating of the latter and the impregnating of the honeycomb central spacer element, the introduction of the impregnated bottom wall into a specifically provided mold or in a specifically provided packaging mold, having a thermally active floor.

Then, after having stretched the honeycomb spacer element, as pre-sized according to compressed packs, of outside construction and supplying, the spacer element must be stretched within the mold above the pre-impregnated bottom wall.

Then, the top wall is cut to size and pre-impregnated, and being applied to the honeycomb central spacer element, and then the mold is closed by the thermally active forming top plate.

The assembly is then supplied under pressing plates and the thermal polymerization process is started and continuously controlled, followed by a possible other post-polymerization step, and then the obtained article of manufacture is removed from the press-oven, and then subjected to finishing operations such as trimming, painting, coating steps and the like.

As it should be apparent the above disclosed manual method is a comparatively complex method including a lot of complementary integrating steps, which negatively affect, from a technical and economical standpoint, the performance thereof.

Thus, it is not possible to meet, by the disclosed manual method, the at present very stringent requirements for this type of products.

Actually, the prior technology is negatively affected by the discontinuous nature of the disclosed method, as well as by a lackness of dimension and typological performance as well as by the very high cost associated with the required equipment and auxiliary systems, with further great expenses due to maintenance and labour costs.

### SUMMARY OF THE INVENTION

Accordingly, the aim of the present invention is to overcome the above mentioned drawbacks, by providing an automatic continuous system affording the possibility of making a composite flat panel by a fully automatic making operation, and by using very flexible and reliable systems which can be easily fitted without any preparation dead times.

Within the scope of the above mentioned aim, a main object of the present invention is to provide such an automatic continuous system which is constituted by very simple modular assemblies.

Yet another object of the present invention is to provide such an automatic system which, in addition to providing a fully finished panel in a ready for use condition, is very reliable and safe in operation and, moreover, is very competitive from a mere economic standpoint.

According to one aspect of the present invention, the above mentioned aim and objects, as well as yet other objects, which will become more apparent hereinafter, are achieved by an automatic continuous system for making panels of a glass fabric material and being spaced by light alloy cellular spacer elements, characterized in that said system comprises, in a cascade relationship: an expansion station for expanding therein a compressed cellular spacer element; a coupling station, for coupling to said cellular spacer element wall fabrics as well as holding layers, a polymerizing station for polymerizing resins impregnating said wall fabrics; and a trimming and cutting station for trimming and cutting the formed rigid panel.

### BRIEF DESCRIPTION OF THE DRAWINGS

Further characteristics and advantages of the present invention will become more apparent hereinafter from the following detailed disclosure of a preferred, though not exclusive, embodiment of an automatic continuous system form making glass fabric panels and light alloy cellular spacer elements, being shown, by way of an indicative, but not limitative example, in the figures of the accompanying drawings, where:

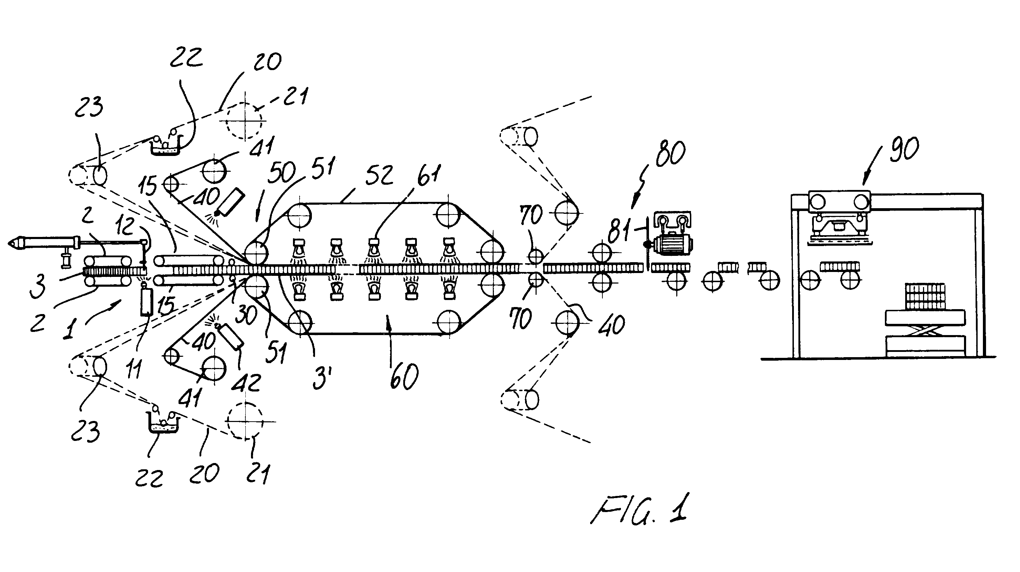

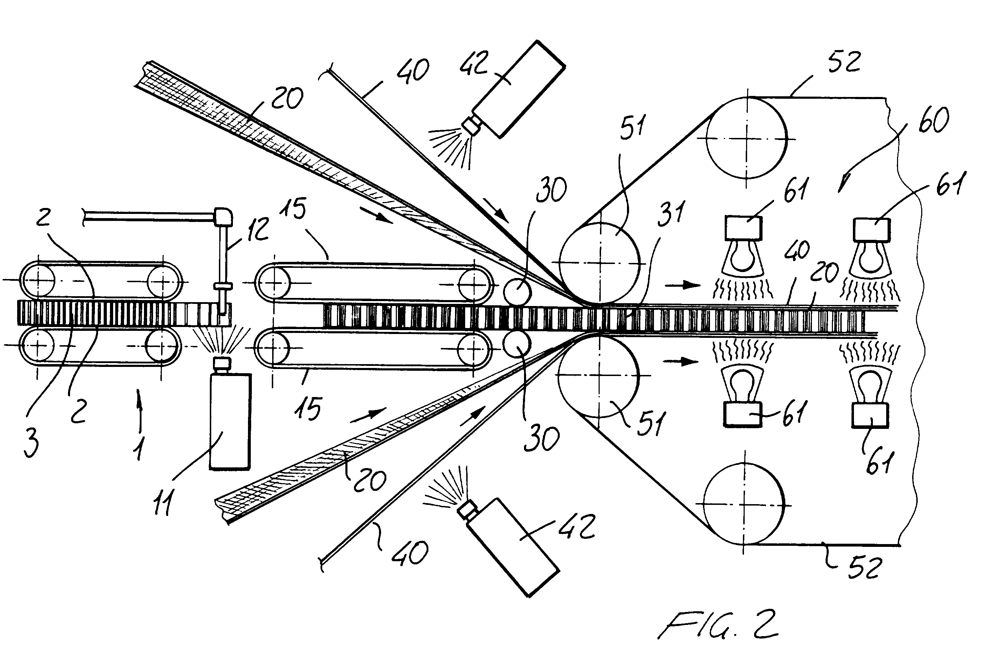

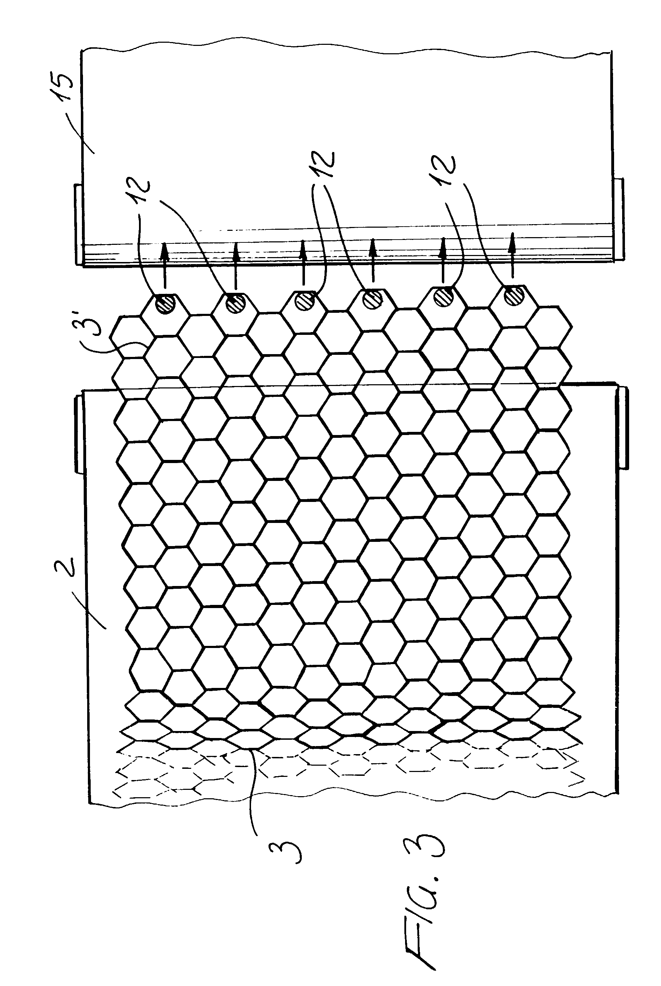

Figure 1 is a schematic view illustrating the system according to the present invention;
Figure 2 illustrates, on an enlarged scale, the expanding step of the cellular spacer element and the coupling thereof to the wall fabrics;
Figure 3 schematically illustrates the expanding step of the cellular spacer element; and

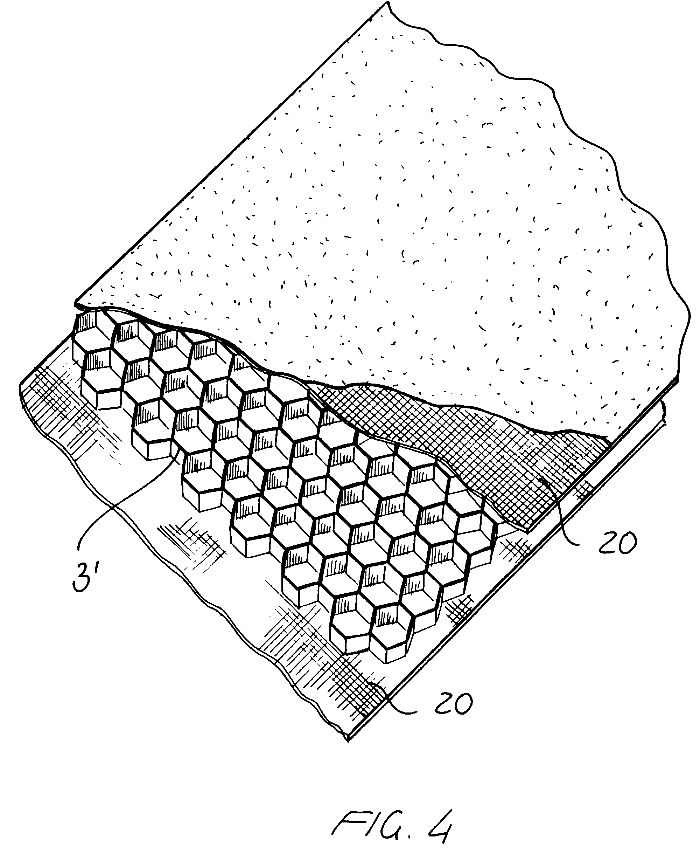

Figure 4 illustrates a composite panel made by the system according to the present invention.

### DESCRIPTION OF THE PREFERRED EMBODIMENTS

With reference to the number references of the above mentioned figures, the automatic system according to the present invention comprises an expanding station, generally indicated by the reference number 1, for expanding therein a compressed cellular element.

More specifically, the station 1 is provided with a pair of facing tracks 2, the speed of which is suitably modulated, and which drive therebetween the compressed cellular spacer element, indicated by the reference number 3.

At the outlet of the pair of tracks 2 an expanding assembly 20 is provided, which is arranged after said tracks 2 and before the inlet of a pair of differential tracks 15, which are arranged in a facing opposite relationship, in order to modulate the speed of the expanded spacer element with respect to the pair of tracks 2.

In particular, the expanding assembly 10, which is monitored by a videocamera 11, is provided with a comb element 12 operating for expanding at the start the compressed cellular element 3, during the supplying step in which new compressed cellular blocks are supplied.

In operation, the disclosed system will pre-stretch and pre-pinch the head portion of the compressed spacer block and, if necessary, it will be butt-process said block, before gripping it, in a definitive and stabilizing manner, between the differential tracks 15.

At the outlet of the differential tracks 15, the cellular spacer element, which is now arranged in a distended position, as indicated at 3', is provided with wall fabrics 20, made of a glass fibre fabric material, supplied by supplying bobbins or rolls 21, therefrom the fabric is withdrawn, and caused to pass through an impregnating tube 22 and through a subsequent extending roller 23, provided for removing any cross and longitudinal folds.

At the outlet of the differential tracks 15 are moreover provided impregnating rollers 30 for impregnating the cellular spacer element 3', which operate to improve the adhesion of the impregnated fabric to the cellular element.

On the wall fabric a holding plastic film material, indicated by the reference number 40, is then applied, which plastic film material is supplied by supplying bobbins 41

Monitoring videocameras 42 are furthermore provided, for monitoring the fabric and holding film material supplying operations.

The system is moreover provided, downstream of the impregnating roller 30, with a coupling station, indicated by the reference number 50, including a pair of pressing cylinders 51, on which are entrained pressing tracks 52, made of photopermeable materials, adapted to connect the film material to the cellular spacer element and transport or drive it to the polymerizing station, indicated by the reference number 60, comprising a plurality of electric lamps 61, arranged at the top and at the bottom, which will molecularly transform the specifically designed photosensitive resins, as suitably controlled and modulated, in order to polymerize the aggregating resins which will provide a final stabilization of the panel.

The tracks will have an extension depending on the provided polymerizing time and will be designed with broad safety characteristics with respect to the provided packaging speed.

As disclosed, the tracks are made of specifically designed photopermeable materials, thereby they will allow the light emitted from the lamps 61 to pass therethrough, while intimate contacting the composite panel during the making thereof.

Immediately downstream of the polymerizing station are provided a pair of removing rollers 70 which will remove the holding film material 40, as a removal thereof is provided, for a possible reprocessing thereof.

Thus, the composite panel, downstream of the two removing rollers, will have either a coated form or a not coated form, depending on the provided finishing programs and provided treatments.

At the outlet of the removing rollers 70 is provided a trimming and cutting station 80 for properly trimming and cutting the formed rigid panel, which station comprises rotary blade assemblies, the blades of which are made of special steel materials and will have any suitable contours, in order to longitudinally trim the panel and, if desired, to provide one or more longitudinal cuts; a cross blade 81 being moreover provided for performing flying cross cuts, said cross blade being mounted on a slidable assembly.

Then, the made panels, having the desired size features, will be conveyed to a packaging station 90 where they will be arranged on driven tables and rollers thereby they will be conveyed to finishing stations such as sanding, glazing and painting stations or the like, or, possibly, they will be stacked onto one another.

From the above disclosure it should be apparent that the invention fully achieves the intended aim and objects.

In particular, the fact is to be pointed out that the subject automatic continuous system, for making panels of glass fabric and light alloy cellular spacer elements will allow to continuously and automatically make composite panels, with the possibility of storing said panels with the desired size.

The invention as disclosed is susceptible to several variations and modifications all of which will come within the inventive idea scope.

Moreover, all of the details can be replaced by other technically equivalent elements.

In practicing the invention, the used materials, as well as the contingent size and shapes, can be any, depending on requirements.

## Claims

1. An automatic continuous system, for making panels of a glass fabric material and being spaced by light alloy cellular spacer elements, characterized in that said system comprises, in a cascade relationship: an expansion station for expanding therein a compressed cellular spacer element; a coupling station, for coupling to said cellular spacer element wall fabrics as well as holding layers, a polymerizing station for polymerizing resins impregnating said wall fabrics; and a trimming and cutting station for trimming and cutting the formed rigid panel.

2. An automatic system, according to the preceding claim, characterized in that said expanding station is provided with a pair of tracks, for holding therebetween said compressed cellular spacer elements, downstream of said tracks a differential track pair being arranged, adapted to form cells in said spacer elements.

3. An automatic system, according to the preceding claims, characterized in that said system comprises moreover an expanding assembly, including a comb element adapted to perform the starting expanding step of said cellular spacer element.

4. An automatic system, according to one or more of the preceding claims, characterized in that said system comprises moreover bobbins for supplying the wall fabrics; said wall fabric being caused to pass through resin impregnating tubes and on rollers for stretching said fabrics.

5. An automatic system, according to one or more of the preceding claims, characterized in that said system comprises moreover supplying bobbins for supplying a holding plastic film material.

6. An automatic system, according to one or more of the preceding claims, characterized in that said system comprises moreover, upstream of the coupling station, impregnating rollers for impregnating said cellular spacer elements.

7. An automatic system, according to one or more of the preceding claims, characterized in that said coupling station is provided with a pressing roller pair, thereon are entrained tracks permeable to polymerizing radiating energy.

8. An automatic system, according to one or more of the preceding claims, characterized in that said polymerizing station is provided with a plurality of energy or power sources (such as UV infrared, microwave sources) which are arranged at the top and at the bottom of said panel being formed.

9. An automatic system, according to one or more of the preceding claims, characterized in that said panel trimming and cutting station is provided with blades for longitudinally cutting the edges of said panel and, possibly, for performing middle longitudinal cuts, as well as being moreover provided with a further blade for performing a flying crosscutting operation.

10. An automatic system, according to one or more of the preceding claims, characterized in that said system comprises moreover a storing and stacking station for storing and stacking therein the panels cut to size.
